# EUROPEAN PATENT SPECIFICATION

(11) **EP 4 406 712 B1**
(45) Date of publication and mention of the grant of the patent: **11.03.2026**
(21) Application number: 23153920.6
(22) Date of filing: 30.01.2023
(51) Int. Cl.: B27N 1/00, B27N 3/04, B27N 3/08, B27N 3/20, B29C 43/00, B29C 43/14, B29C 43/24, B29C 43/26, B29C 43/46, B29C 43/52, H01B 3/52, B27N 3/02

(54) **DEVICE AND METHOD FOR PRESSBOARD MANUFACTURING**
VORRICHTUNG UND VERFAHREN ZUR HERSTELLUNG VON PRESSPLATTEN
DISPOSITIF ET PROCÉDÉ DE FABRICATION DE CARTON COMPRIMÉ

(43) Date of publication of application: 31.07.2024
(73) Proprietor: Hitachi Energy Ltd, 8050 Zürich (CH)
(72) Inventor: BEL FDHILA, Rebei, 724 76 Västerås (SE); SAND, Ulf, 72356 Västerås (SE); MUKHERJEE, Pritam, 722 27 Västerås (SE)
(74) Representative: Valea AB

(56) References cited:
- EP-A1- 3 501 768
- DE-A1- 102015 107 374
- US-A- 4 111 744
- US-A1- 2005 238 865

## Description

### TECHNICAL FIELD

The present invention relates to manufacturing of pressboard for electrical insulation in transformers. Pressboard may be produced from pure unbleached cellulose taken from wood, such as long fibered coniferous wood. Due to the high chemical purity, mechanical strength and good oil impregnability, pressboard is suitable for use as an insulation material for electric machines and capacitors, for example in oil-filled power transformers and distribution transformers.

### BACKGROUND OF THE INVENTION

Pressboard may be manufactured using hot press operation in which a plurality of wet fiber precursor sheets are interposed between press plates to form a stack which is pressed and heated to dry the precursors into finished pressboards. The time required for a batch pressing may be 10 minutes to 3 hours, largely depending on thickness of the pressboard and level of moisture content. Also, the process requires substantial amounts of energy for heating the press plates and the hot press chamber.

Traditional drying methods are often based on dehumidifying wood from surface to inside. It happens that the surface is complete dry, but the inside of wood or pressboard is still wet. While water exits the wood, it can cause shrinking and cracks that deteriorate the quality of the product.

Accordingly, an object of the present disclosure is to provide an improved manufacturing method for pressboards, enabling faster production, improved surface finish and higher energy efficiency.

According to US 2005/238865, which discloses preambles of claims 1 and 9, plastic fibers and plant fiber such as thinned woods, scrap woods of buildings, stumps, branches or barks are stirred and mixed with each other into a felt-like material. Microwaves are radiated on the felt-like fiber mixture material. After a sufficient temperature is ensured for the felt-like fiber mixture material of low density by the microwave radiation, the fiber mixture material is fed to a pair of upper and lower pressure plates and compressed thereat. The fiber mixture material is rapidly compressed by the pressure plates so as to be melted and integrated. Then, the fiber mixture material is cooled so as to be further packed by such cooling, thereby becoming a stronger plastic fiber board. US4111744 relates to a process of producing a board product from cellulose-containing fiber material involves fusion bonding of the fibers themselves under controlled heat and pressure. It begins with forming a mat from interlaced cellulose fibers, which is then placed between heated press platens at a temperature ranging from 450°F to 800°F. The mat, with a moisture content between 2% and 50%, is introduced along with a perforated heat-conducting sheet that facilitates the release of steam and gases to prevent pressure buildup.

The press platens move toward each other, applying heat and pressure while shielding the mat from direct air exposure. To enhance heating, radio frequency (RF) energy is applied for up to 120 seconds, ensuring the temperature throughout the mat reaches a level necessary for fusion bonding. Once the pressing stage is complete, the pressure is released, and the mat is removed. Controlled cooling follows, first bringing the temperature below 400°F while keeping the mat enclosed to prevent air exposure, and finally cooling it to ambient temperature. This method results in a durable board product held together by the bonded cellulose fibers.

EP3501768 relates to a method for manufacturing a high-density strand board enables high-density strand boards to be formed by using about the same press pressure as press pressures required to form strand boards with common densities, so that the high-density strand boards can be produced without using special facilities and equipment. A pretreatment process P2 is performed on strands 5 before pressing. The pretreatment process P2 is comprised of a first treatment process P2a and a subsequent second treatment process P2b. At least one of beating, high-frequency treatment, high-temperature high-pressure treatment, high-water pressure treatment, repeated deaeration and dehydration treatment, and chemical treatment is performed in the first treatment process P2a, and roll pressing or flat press pressing is performed in the second treatment process P2b. A strand board B with a density of 750 to 950 kg/mis formed by using a press pressure of 4 N/mmor less.

DE102015107374 relates to an apparatus and to a method for continuous production of materials, preferably for the production of material panels from substantially non-metallic material, comprising a continuous furnace for continuous heating of material on a continuously circulating conveyor belt and a press connected downstream in the production direction. The continuous furnace has a plurality of magnetrons for producing electromagnetic waves wherein the continuous furnace has hollow conductors having discharge openings for feeding the waves into a radiation chamber.

### SUMMARY OF THE INVENTION

According to a first aspect, this and other objects is achieved by a method as defined in independent claim 1, with alternative embodiments specified in dependent claims. The method is suitable for producing pressboard and comprises, in any order:
a) mechanically compressing at least one pressboard precursor, and
b) emitting electromagnetic waves towards the pressboard precursor(s).

At production of pressboard, the pressboard precursor must be dried.

Mechanical compression of the pressboard precursor forces liquid out of the wet pressboard precursor. By emitting electromagnetic waves towards the pressboard precursor, liquid is heated within the precursor, thus promoting drying from within the material. This enables reduction of the time it takes to dry the pressboard. Also, it enables reduced energy consumption, as compared to using only convective drying in a heated chamber, i.e., without any electromagnetic waves.

In addition to emitting electromagnetic waves, ultrasound may be emitted towards the pressboard precursor. Emission of ultrasound towards the pressboard precursor accelerates the phase change of moisture in the pressboard from liquid to gas phase.

The electromagnetic waves may be microwaves with frequency in the range of 1 GHz to 300 GHz. Electromagnetic waves with such wavelength provide deep penetration into the pressboard precursor, and generally high rate of heat generation within the bulk of the pressboard.

The electromagnetic waves may be radio waves with frequency in the range of 1 MHz to 100 MHz. Electromagnetic waves with such wavelength generate heat in the pressboard by its interaction with the water molecules. However, the rate of heat of generation is less than that of the microwave, and proportional to the water content in the pressboard.

The method may further comprise providing one or more electromagnetic shield members configured to, at least partially, enclose one or more volumes around one or more portions of the pressboard precursor, wherein the microwaves are emitted within, or into, the one or more volumes.

The electromagnetic shield members contain most of the electromagnetic waves wherein the pressboard precursor absorbs the energy in the electromagnetic waves.

The method may further comprise removing water and/or water vapor from the one or more volumes.

By removing water and/or water vapor from the one or more volumes, saturation of the moisture level inside the volumes is mitigated, such that drying for a longer time or continuous drying operations are enabled. Water may be removed by a drain in a lower portion of the volume(s), thereby mitigating build-up of liquid water or water vapor in the volume(s).

The method may further comprise lowering an ambient gas pressure around the pressboard precursor (2) to a pressure below atmospheric pressure.

Lowering the ambient pressure induces a reduction of boiling point temperature and consequentially an earlier start of the phase change from liquid to vapor.

Said emitting of electromagnetic waves may comprise emitting intermittent bursts of emitted electromagnetic waves, or may comprise repeatedly varying the power of electromagnetic waves emitted over time between higher power levels and lower power levels.

By emitting the electromagnetic waves intermittently, or by varying power over time, the energy supplied by the electromagnetic waves varies over time. In times with no, or lower, supply of energy to the pressboard precursor, heat conduction within the pressboard precursor has time to act to even out any hot spots which may be caused by the electromagnetic waves. Hotspots may lead to overheating and a burnt, cracked or weakened surface of the pressboard.

Said mechanical compression of the pressboard precursor comprises passing the pressboard precursor between at least one pair of rollers together compressing the pressboard precursor as it passes a gap between the respective pair or rollers.

The rollers provide a gap between the rollers, said gap being smaller than the thickness of the pressboard precursor passed between the rollers. The rollers thus provide a robust and reliable means for compressing the pressboard precursor to a given thickness to remove liquid from the pressboard precursor.

The method may further comprise heating at least one of the rollers, thereby heating the pressboard precursor.

By supplying heat to the pressboard precursor, liquid in the pressboard precursor more easily evaporates. By heating at least one of the rollers, heat is supplied to the pressboard precursor from the heated roller(s), which can easily be speed controlled to control the amount of heat transferred to the pressboard precursor.

Said mechanical compression of the pressboard precursor comprises, in line with the claimed invention, sequentially passing the pressboard precursor through a plurality of compression stations, each compression station comprising at least one pair of rollers together compressing the pressboard precursor as it passes a gap between the respective pair or rollers, wherein the gap is smaller for each station in the sequence.

The power of electromagnetic waves emitted may be reduced for each compression station in the sequence. As the pressboard is compressed, its moisture content and mass is locally reduced, which means that less heating power is needed to heat the pressboard later in the sequence/process. By reducing the power of the electromagnetic waves for each compression station, overheating and burnt, cracked or weakened surface of the pressboard is mitigated. The power reduction can be achieved by reducing the effect and/or can be achieved by running the power supply intermittently to reduce the total power provided over time. Electromagnetic waves with temporally variable power could also be used to this end.

As a complement to compression using pairs of rollers, said mechanical compression of the pressboard precursor may comprise pressing the pressboard precursor between a plurality of press plates.

Press plates provide an alternative means for compressing the pressboard precursors. Several press plates may be used together as a stacked array of press plates for receiving pressboard precursors sandwiched between the press plates.

At least one of the plurality of press plates may be heated, thereby heating the pressboard precursor.

By supplying heat to the pressboard precursor, liquid in the pressboard precursor more easily evaporates. By heating at least one of the plurality of press plates, heat is supplied to the pressboard precursor from the heated press plate(s),

The electromagnetic waves may be emitted towards a first area of the pressboard precursor upstream of the pair of rollers and/or may be emitted towards a second area of the pressboard precursor downstream of the pair of rollers.

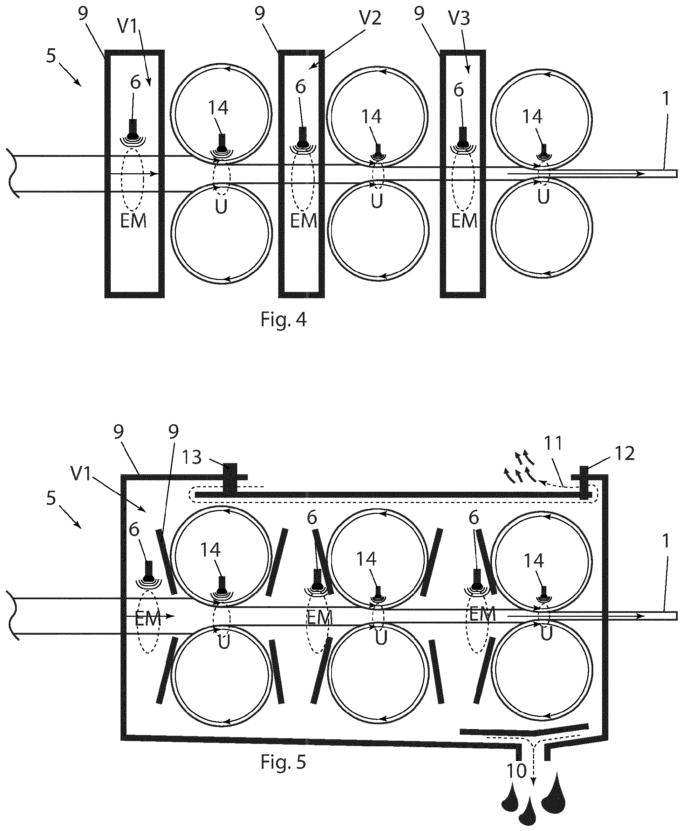

By emitting more electromagnetic energy, the drying effect is improved. It is beneficial to apply electromagnetic energy upstream as well as downstream of the rollers to ensure that the heating effect continues to be provided at both stages. As shown in fig. 5, additional electromagnetic shield members 9 may be provided around any components which should be protected from electromagnetic waves, such as the rollers 2.

The power of the ultrasound emitted may be configured such that at least some of the water of said pressboard precursor changes phase from liquid phase to vapor phase or to gas phase.

According to a second aspect, this and other objects is also achieved by a device as defined in independent claim 9, with alternative embodiments specified in its dependent claims.

The device according to the following embodiments performs at least some of the functions described above with reference to the respective corresponding embodiments of the method.

The device is suitable for de-watering a pressboard precursor and comprises a compression assembly configured to compress the pressboard precursor, and at least one electromagnetic wave emitter configured to emit electromagnetic waves towards the pressboard precursor and/or the compressed pressboard. The electromagnetic wave emitter may be configured to emit microwaves with frequency in the range of 1 GHz to 300 GHz.

The device may further comprise one or more electromagnetic shield members configured to, at least partially, enclose one or more volumes around one or more portions of the pressboard precursor.

The electromagnetic wave emitter is configured to emit radio waves with frequency in the range of 1 MHz to 100 MHz.

The device may further comprise a vent and/or a drain configured to enable moisture, such as water and/or water vapor, to leave the one or more volumes.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

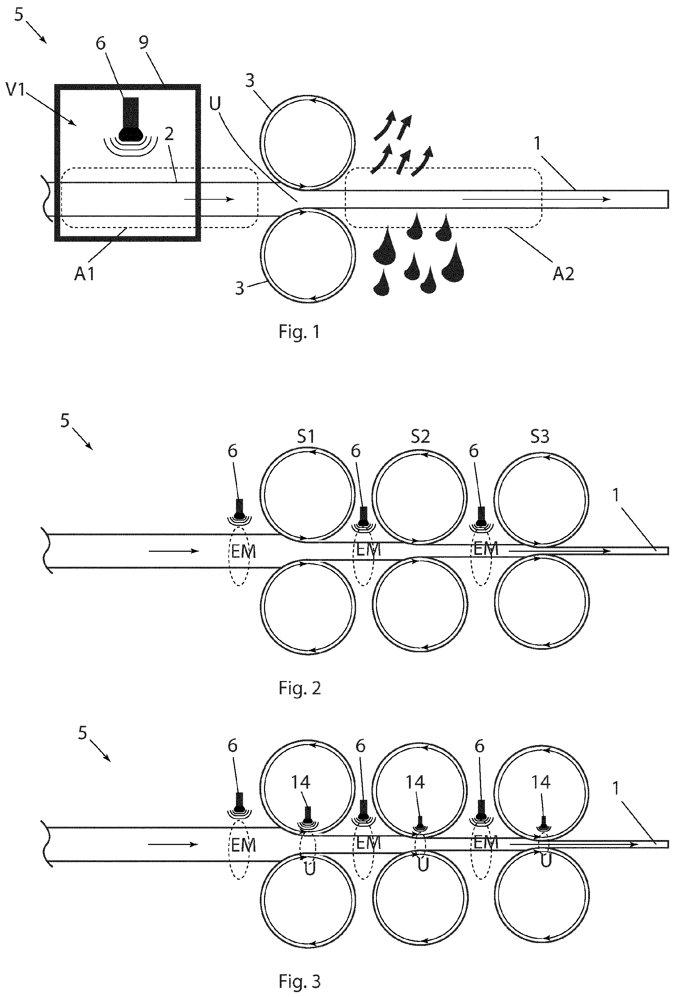

Figs. 1-5 schematically show different embodiments of a device for de-watering a pressboard precursor using one or more pair of rollers and various embodiments of an electromagnetic wave emitter.
Fig. 1 shows a device in which the electromagnetic wave emitter is suspended upstream of a compression assembly comprising a single pair of rollers. The emitter is enclosed by an optional electromagnetic shield comprising a plurality of shield members forming an enclosure with openings for input and output of the pressboard precursor.
Fig. 2 shows a device in which the compression assembly comprises a plurality of pairs of rollers, and the electromagnetic wave emitter comprises a plurality of emitters distributed along the production line. This embodiment has not electromagnetic shield but could alternatively in other embodiments comprise an electromagnetic shield.
Fig. 3 shows a device corresponding to the device of fig. 2 but further comprising ultrasound emitters configured to emit ultrasound towards the pressboard precursor.
Fig. 4 shows a device corresponding to the device shown in fig. 3, but further provided with optional electromagnetic shielding members around each pair of rollers and around a corresponding electromagnetic wave emitter. The shield contains energy from each emitter to a specific portion of the pressboard precursor.
Fig. 5 corresponds to the device also shown in fig. 4, but with a different design of the electromagnetic shield. Here, the electromagnetic shield encloses a major part of the production line including all electromagnetic wave emitters. Alternatively, the shield could be a shield forming a room around the device such that workers can move around inside the shielded volume, at least when the device is stopped and/or does not emit electromagnetic waves.
   The number and type of electromagnetic emitters and ultrasound emitters may be freely varied as appropriate, for example depending on the type of waves to be emitted and thus on the design and extent of the emitter(s) used. Also, the design of the compression assembly may affect the positioning and design of emitters.

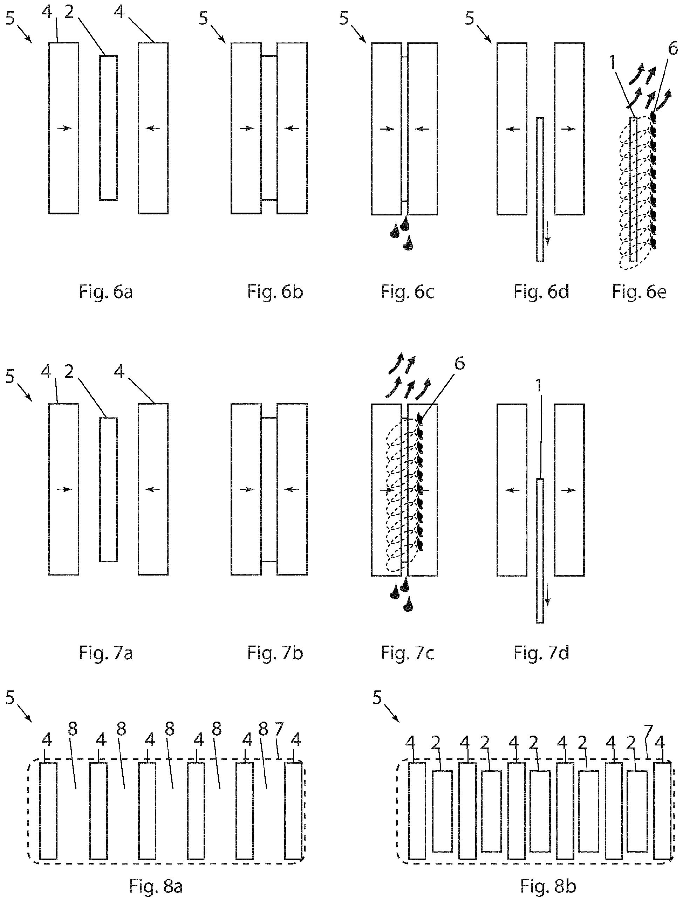

Figs. 6a-e and 7a-d schematically show two similar embodiments of a device for producing pressboard; In figs. 6a-e, the device comprises an electromagnetic wave emitter and/or ultrasound emitter external to the press plates, and in figs. 7a-d, an electromagnetic wave emitter and/or ultrasound emitter is provided integrated with the press plates.
Figs. 8a-b schematically show a setup using more than two plates to provide more than one intermediate space between the press plates such that more than one pressboard precursor can be sandwiched between the press plates and compresses at a same time by compression of the whole sandwiched stack of press plates and pressboard precursors; Fig. 8a shows the plurality of press plates before pressboard precursors are positioned between the press plates, and fig. 8b shows the press plates with pressboard precursors positioned between the press plates, before compression of the pressboard precursors.
   It should be understood, that suitably arranged electromagnetic shielding members may be positioned around, or partially around, the press plates or stack of press plates.

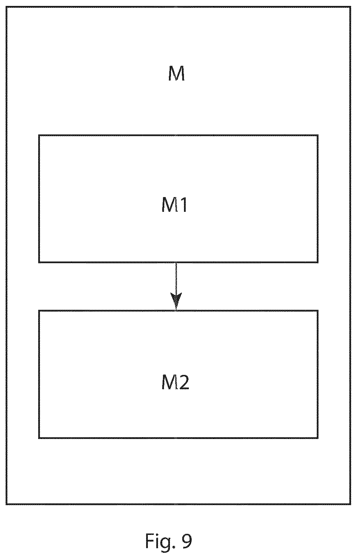

Fig. 9 schematically shows a first embodiment of a method according to the present disclosure.

A same reference numeral is generally not repeated for a same feature occurring in several figures.

### DETAILED DESCRIPTION

Embodiments of a method of producing a pressboard will hereinafter be described with reference to the appended drawings, which show devices for performing such methods.

As mentioned above, pressboard 1 is typically produced from pure unbleached cellulose taken from wood, such as long fibered coniferous wood. The pressboard 1 may alternatively be produced from cellulose fibers from other sources such as cotton, hemp and jute or other tree types. Alternatively, polymer fibers may be used as aramid or a combination of cellulose and polymer fibers. In addition, additives may be used, such as binders and fillers.

Pressboard 1 is conventionally manufactured using hot press operation in which a plurality of wet fiber precursor sheets 2 are interposed between press plates 4 to form a hanging stack which is pressed and heated to remove water and dry the pressboard precursors 2 into finished pressboards 1.

The water removal and drying process may be a process in which the press plates 4 are kept closed until the heated pressboard 1 is dried. Alternatively, the drying process may use cycling with repeated separation and closing of the press plates 4. Separation enables moisture to easier leave the pressboard material, whereafter additional compression and any further heating is made by again closing the press plates 4 and compressing the stack of press plates 4.

According to the present disclosure, the water removal and drying process is improved by providing one or more electromagnetic wave emitters 6 and emitting electromagnetic waves EM towards the pressboard precursor 2 to speed up drying and enable drying at lower temperature. Optionally, one or more ultrasound emitters 14 are also provided in addition to electromagnetic wave emitters 6, wherein ultrasound U is emitted towards the pressboard too, in addition to electromagnetic waves EM.

The present disclosure also presents an alternative to the use of press plates 4 by suggesting use of a process incorporating at least one pair of rollers 3 between which the pressboard precursor 2 is fed to compress the pressboard precursor 2 and thereby remove liquid from the pressboard material.

The rollers 3 may be permeable to fluid, such as liquid water or water vapor, thereby enabling the liquid water or water vapor to more easily leave the pressboard precursor 2 upon being compression of the pressboard precursor 2 between the rollers 3. Liquid water or water vapor can then be removed from within the rollers 3, using any suitable arrangement, such as using venting, draining and/or removal by suction.

The use of rollers 3 for compression enables a continuous compression and drying process where a continuous feed of pressboard precursor 2/pressboard 1 material is directed towards the rollers 3. Downstream of the rollers 3, i.e. the region which the pressboard material enters after it has passed through the rollers 3, the pressboard material is typically further dried, for example during transportation on a conveyor system. The pressboard material on the conveyor system has a large surface area facing surrounding atmosphere and is thus suitable for letting evaporated liquid leave the pressboard material.

It should be understood that electromagnetic wave emission EM could be used both when using press plate 4 compression and when using compression between rollers 3. The material of the press plates 4 or rollers 2 is preferably chosen not to interact with the EM waves.

Also, it should be understood that heating of the pressboard material could be provided both when using press plate 4 compression and when using compression between rollers 3. For example, one or more of the rollers 3 could be heated, or one or more of the press plates 4 could be heated, or a radiant heater or hot air heater may be provided to heat the pressboard material.

Electromagnetic waves EM could be emitted to the pressboard material, before compression, after compression, or during compression. Hence, the electromagnetic wave emitters 6 may direct electromagnetic waves towards the pressboard material, upstream of the rollers 3, downstream of the rollers 3, or towards the gap between the rollers 3 where the pressboard material is compressed.

In a first exemplary embodiment, shown in fig. 1, a device 5 is provided for de-watering a pressboard precursor 2. The device 5 comprises a compression assembly configured to compress the pressboard precursor 2. The device 5 also comprises an electromagnetic wave emitter 6 configured to emit electromagnetic waves towards the pressboard 1 (in this case towards the pressboard precursor 2).

In the present embodiment, the electromagnetic wave emitter 6 is positioned upstream of the compression assembly. However, any other suitable arrangement and positioning of the electromagnetic wave emitter(s) 6 may be used instead.

By positioning the electromagnetic wave emitter 6 upstream of the compression assembly, where moisture contents of the pressboard precursor is higher, early heating of the pressboard precursor 2 is promoted, thus shortening total drying time and energy consumption.

In other embodiments, an electromagnetic wave emitter 6 may be provided downstream of a compression assembly. Providing the electromagnetic wave emitters 6 downstream of a pair of rollers 3 is advantageous in that remaining moisture in the pressboard continues to receive energy required to boil/vaporize moisture in the pressboard precursor, thereby promoting faster drying.

As mentioned above, in addition to using mechanical compression and emission of electromagnetic waves EM, the pressboard 2 may additionally be heated by convection heating or conductive heating. For example, pairs of rollers 3 may be provided with heating means for heating the rollers 3, which in turn heat the pressboard material. In other embodiments, the heating means may alternatively be omitted or replaced with some other suitable heating means, such as infrared heaters.

Other feasible embodiments of the device include both at least one pair of rollers 3 and a plurality of press plates 4, wherein device is such that the pressboard passes between rollers 3 before being pressed between press plates 4. Such an embodiment combines the advantage of efficient continuous removal of liquid as the pressboard material passes between the rollers 3, wherein the press plates 4 subsequently provide improved control of the dryness of individual portions of the pressboard 2 or of separated sheets of pressboard 2.

Fig. 6a show two separated press plates 4 with a piece of uncompressed pressboard 2 positioned between the plates 4. Fig. 6b shows partial closing of the press plates 4. Fig. 6c shows full compression of the piece of pressboard 2 caused by further closing of the press plates 4 (closing = moving press plates 4 closer to each other, i.e. reducing separation/spacing between press plates 4).

Fig. 6d shows separation of press plates 4 and removal of the compressed piece of pressboard 2. Fig. 6e shows emission of electromagnetic waves EM and/or ultrasound U towards the compressed piece of pressboard 2 using an array of suitable emitters 6. The press plates 4 are typically hanging vertically, with the pieces of pressboard 2 hanging vertically between the press plates 4. The stack 7 of press plates 4 is then compressed using any suitable compression/clamping device, for example using a hydraulic cylinder compressing the stack 7 of press plates 4.

Figs. 7a-d largely correspond to the fig. 6 embodiment but instead the electromagnetic wave emitter 6 and/or ultrasound emitter 14 is integrated into the press plate(s) 4 and hence the piece of compressed pressboard 2 not removed before being subjected to electromagnetic waves EM and/or ultrasound U.

Figs. 8a showcase the fact that several press plates 4 are typically used together as a 'stack' 7 such that a plurality of pieces of pressboard can be compressed at once, sandwiched between the press plates 4, as shown in fig. 8b.

In all embodiments of the method according to the present disclosure, the method for producing pressboard comprises, in any order:
a) mechanically compressing M1 at least one pressboard precursor 2, and
b) emitting M2 electromagnetic waves EM towards the pressboard precursor(s) 2.

At production of pressboard 1, the pressboard precursor 2 must be dried. Mechanical compression of the pressboard precursor 2 forces liquid out of the wet pressboard precursor 2. By emitting electromagnetic waves EM towards the pressboard precursor 2, liquid is heated within the precursor 2, thus promoting drying from within the material. This enables reduction of the time it takes to dry the pressboard precursor 2. Also, it enables reduced energy consumption, as compared to using only convective drying in a heated chamber, i.e., without any electromagnetic waves EM.

In addition to emitting electromagnetic waves EM, ultrasound U may be emitted towards the pressboard precursor 2. Emission of ultrasound U towards the pressboard precursor 2 enables the liquid to leave the material at lower temperature, for example by changing phase from liquid to gas phase.

The power of electromagnetic wave EM emission and/or ultrasound U emission is preferably adapted in accordance with the size and thickness and mass of the pressboard material, such that the electromagnetic wave EM emission and/or ultrasound U emission has a positive effect on the evaporation of liquid from the pressboard material, meaning that at least some of the water of said pressboard material changes phase from liquid phase to vapor phase or to gas phase.

In this embodiment, the electromagnetic waves EM comprise microwaves with frequency in the range of 1 GHz to 300 GHz.

The electromagnetic waves may in other embodiments alternatively, or additionally, comprise radio waves with frequency in the range of 1 MHz to 100 MHz.

As shown in figs. 1, 4 and 5, the method may comprise providing one or more electromagnetic shield members 9 configured to, at least partially, enclose one or more volumes V1, V2, V3 around one or more portions of the pressboard precursor 2, wherein the electromagnetic waves EM are emitted within, or into, the one or more volumes.

The electromagnetic shield members 9 contain most of the electromagnetic waves such that the electromagnetic waves get absorbed by the pressboard precursor 2.

If a plurality of electromagnetic wave emitters 6 are provided, it may be beneficial to contain emission from each electromagnetic wave emitter 6, for example to avoid a stronger emission adjacent a thicker portion of the pressboard to reach a thinner portion of the pressboard which has passes a compression assembly. Such isolation is schematically shown in fig. 4.

The method may further comprise removing water and/or water vapor from the one or more volumes.

By removing water and/or water vapor from the one or more volumes, saturation of the moisture level inside the volumes is mitigated, such that drying for a longer time is enabled. Water may be removed by a drain 10 in a lower portion of the volume(s), thereby mitigating build-up of liquid water or water vapor in the volume(s).

As shown in fig. 5, water may for example be removed by providing a drain 10 at a lower portion of an electromagnetically shielded volume, such that water can escape the electromagnetic shield by gravity.

Alternatively, or additionally, water vapor may be removed by providing air vents to allow air to enter and exit the volume enclosed by the electromagnetic shield members 9. An optional ventilation fan/gas pump 12 is provided to enable forced air ventilation through the vents. Vents 11 and/or drains 10 may be provided in any electromagnetic shield member 9 or other enclosure, and not only in the embodiment shown in fig. 5.

The method may further comprise lowering an ambient gas pressure around the pressboard precursor 2 to a pressure below atmospheric pressure. Lowering the ambient pressure induces a reduction of boiling point temperature and consequentially an earlier start of the phase change from liquid to vapor.

Ambient gas pressure may for example be controlled by enclosing portions of the production line/device 5, or the entire production line/device 5, and operating a gas pump 12 to pump gas out of the enclosed portion of the production line, to thereby reducing the gas pressure. The gas pump 12 could be used to provide forced ventilation through the vents, preferably with an adjustable/controllable vent 13 by the inlet (see fig. 5), such that the ambient gas pressure can be lowered and then kept low by closing or restricting the gas flow by the inlet.

Said emitting of electromagnetic waves may comprise emitting intermittent bursts of emitted electromagnetic waves.

As shown in figs. 1-5, the mechanical compression of the pressboard precursor 2 may comprise passing the pressboard precursor 2 between at least one pair of rollers 3 together compressing the pressboard precursor 2 as it passes a gap between the respective pair or rollers 3.

The rollers 3 provide a gap between the rollers 3, said gap being smaller than the thickness of the pressboard precursor 2 passed between the rollers 3. The rollers 3 thus provide a robust and reliable means for compressing the pressboard precursor 2 to a given thickness to remove liquid or vapor from the pressboard precursor 2.

The method may further comprise heating at least one of the rollers 3, thereby heating the pressboard precursor 2.

By supplying heat to the pressboard precursor 2, liquid in the pressboard precursor 2 more easily evaporates. By heating at least one of the rollers 3, heat is supplied to the pressboard precursor 2 from the heated roller(s) 3, which can easily be speed controlled to control the amount of heat transferred to the pressboard precursor 2.

As shown in figs. 3-5, the mechanical compression of the pressboard precursor 2 may comprise sequentially passing the pressboard precursor 2 through a plurality of compression stations S1, S2, S3 (see fig. 2), each compression station comprising at least one pair of rollers 3 together compressing the pressboard precursor 2 as it passes a gap between the respective pair or rollers 3, wherein the gap is smaller for each station in the sequence. If the thickness of a pressboard precursor 2 is to be reduces a lot, it may be suitable to compress the pressboard precursor 2 in steps, to ease introduction of the pressboard precursor 2 in between rollers 3 in a gap between the rollers 3. Rather than passing the pressboard precursor 2 back and forth between rollers 3 and reducing the gap between the rollers 3 each time, a plurality of compression stations may be used, wherein the gap is smaller for each station which the pressboard precursor 2 passes.

The power of electromagnetic waves emitted may be reduced for each compression station S1, S2, S3 in the sequence. As the pressboard is compressed, its moisture content and mass is locally reduced, which means that less heating power is needed to heat the pressboard later in the sequence/process. By reducing the power of the electromagnetic waves for each compression station, overheating and burnt, cracked or weakened surface of the pressboard is mitigated. The power reduction can be achieved by reducing the effect and/or can be achieved by running the power supply intermittently to reduce the total power provided over time. Electromagnetic waves with temporally variable power could also be used to this end.

As an alternative or complement to compression using pairs of rollers 3, said mechanical compression of the pressboard precursor 2 may comprise pressing the pressboard precursor 2 between a plurality of press plates 4, as shown in figs. 6, 7 and 8.

Press plates 4 provide an alternative means for compressing the pressboard precursors 2. Several press plates 4 may be used together as a stacked array 7 of press plates 4 for receiving pressboard precursors 2 sandwiched between the press plates 4.

At least one of the plurality of press plates 4 may be heated, thereby heating the pressboard precursor 2.

By supplying heat to the pressboard precursor 2, liquid in the pressboard precursor 2 more easily evaporates. By heating at least one of the plurality of press plates 4, heat is supplied to the pressboard precursor 2 from the heated press plate(s) 4.

Emission of electromagnetic waves may be performed on the pressboard precursor 2 at least after said step of mechanically compressing the pressboard precursor 2.

By emitting electromagnetic waves towards the pressboard precursor 2 after the mechanical compression of the pressboard precursor 2, the electromagnetic waves hit a relatively dry pressboard precursor 2, such that less energy is wasted on heating liquid which can be removed more easily by compression.

Emission of electromagnetic waves may alternatively/additionally be performed on the pressboard precursor 2 at least during said step of mechanically compressing the pressboard precursor 2.

Emission of electromagnetic waves will create a phase change leading to a high vapor concentration in the pressboard. Subsequent mechanical compression will allow a fast and efficient moisture extraction and diffusion through the pressboard.

Following the description of the method above, the method is provided by a suitably designed production line, herein referred to as a device for de-watering a pressboard precursor 2. The device according to the following embodiments performs at least some of the functions described above with reference to the respective corresponding embodiments of the method.

The device comprises a compression assembly configured to compress the pressboard precursor 2, and at least one electromagnetic wave emitter 6 configured to emit electromagnetic waves towards the pressboard precursor 2 and/or the compressed pressboard.

The electromagnetic wave emitter 6 is configured to emit microwaves with frequency in the range of 1 GHz to 300 GHz.

As shown in figs. 1-5, the device may further comprise one or more electromagnetic shield members 9 configured to, at least partially, enclose one or more volumes V1, V2, V3 around one or more portions of the pressboard precursor 2.

The electromagnetic wave emitter 6 may alternatively be configured to, alternatively or additionally, emit radio waves with frequency in the range of 1 MHz to 100 MHz.

The device may further comprise a vent 11 and/or a drain 10 configured to enable moisture, such as water and/or water vapor, to leave the one or more volumes.

As shown in fig. 1, the electromagnetic waves may be emitted towards a first area A1 of the pressboard precursor 2 upstream of the pair of rollers 3 and/or may be emitted towards a second area A2 of the pressboard precursor 2 downstream of the pair of rollers 3.

As shown in figs. 1-5, the compression assembly may comprise at least one pair of rollers 3 defining a respective gap between the rollers 3. The gap is adapted for compression of the pressboard precursor depending on the thickness of the pressboard precursor, and the gap is typically within the range of 1-30 mm.

As shown in figs. 3-5, one or more ultrasound emitters 14 may be provided, said ultrasound emitters 14 being configured to emit ultrasound U towards the pressboard precursor. The at least one ultrasound emitter 14 may be attached to the respective roller 3 such that the ultrasound emitter 14 rotates together with the respective roller 3.

The ultrasound emitter 14 may be suspended within an inner space of the respective roller 3 such that the ultrasound emitter 14 does not rotate together with the respective roller 3. Alternatively, the ultrasound emitter 14 may be positioned outside the roller 3, mounted on the roller 3 or suspended such that the ultrasound emitter 14 is free from the roller 3 and does not move together with the roller 3.

The compression assembly may comprise a press plate stack 7 comprising a plurality of press plates 4 operable between a separated configuration P1 in which the pressboard precursor 2 is movable into a respective intermediate space 8 between adjacent press plates 4, and a compressing position P2 in which the press plates 4 are pressed closer to each other to reduce the intermediate spaces 8, thereby compressing the pressboard precursor(s) 2. Such a press plate stack 7 is shown in figs. 8a-b.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the invention being set forth in the following claims.

**Table of reference numerals**

| | |
|---|---|
| 1 | pressboard |
| 2 | pressboard precursor |
| 3 | rollers |
| 4 | press plates |
| 5 | device for de-watering a pressboard precursor |
| 6 | electromagnetic wave emitter |
| 7 | press plate stack |
| 8 | intermediate space |
| 9 | electromagnetic shield member |
| 10 | drain |
| 11 | vent |
| 12 | ventilation fan/gas pump |
| 13 | adjustable/controllable vent |
| 14 | ultrasound emitter |
| M | method for producing pressboard |
| M1 | mechanically compressing |
| M2 | emitting electromagnetic waves |
| EM | electromagnetic waves |
| U | ultrasound |
| A1 | area upstream of rollers |
| A2 | area downstream of rollers |

## Claims

1. A method (M) for producing pressboard for electrical insulation (1), said method comprising, in any order:
a) mechanically compressing (M1) at least one pressboard precursor (2) suitable for electrical insulation, and
b) emitting (M2) electromagnetic waves (EM) towards the pressboard precursor(s) (2), **characterized in that**
said mechanical compression (M1) of the pressboard precursor (2) comprises sequentially passing the pressboard precursor (2) through a plurality of compression stations (S1, S2, S3), each compression station (S1, S2, S3) comprising at least one pair of rollers (3) together compressing the pressboard precursor (2) as it passes a gap between the respective pair or rollers (3), wherein the gap is smaller for each station (S1, S2, S3) in the sequence.

2. The method (M) according to claim 1, wherein the electromagnetic waves (EM) are microwaves with frequency in the range of 1 GHz to 300 GHz.

3. The method (M) according to claim 1, wherein the electromagnetic waves (EM) are radio waves with frequency in the range of 1 MHz to 100 MHz.

4. The method (M) according to claim 2, further comprising providing one or more electromagnetic shield members (9) configured to, at least partially, enclose one or more volumes (V1, V2, V3) around one or more portions of the pressboard precursor (2),
wherein the microwaves are emitted within, or into, the one or more volumes (V1, V2, V3).

5. The method (M) according to claim 4, further comprising removing water and/or water vapor from the one or more volumes (V1, V2, V3).

6. The method (M) according to any one of claims 1-5, further comprising lowering an ambient gas pressure around the pressboard precursor (2) to a pressure below atmospheric pressure.

7. The method (M) according to any one of claims 1-5, wherein the emitting (M2) of electromagnetic waves comprises emitting intermittent bursts of emitted electromagnetic waves, or comprises repeatedly varying the power of electromagnetic waves emitted over time between higher power levels and lower power levels.

8. The method (M) according to any one of the preceding claims, wherein the power of the electromagnetic waves emitted is configured such that at least some of the water of said pressboard precursor (2) changes phase from liquid phase to vapor phase or to gas phase.

9. A device (5) for de-watering a pressboard precursor (2), said device comprising a compression assembly configured to compress the pressboard precursor (2) and comprising at least one electromagnetic wave emitter (6) configured to emit electromagnetic waves towards the pressboard precursor (2) and/or the compressed pressboard (1), **characterized in that**
said compression assembly comprises a plurality of compression stations (S1, S2, S3), each compression station (S1, S2, S3) comprising at least one pair of rollers (3) adapted to compress the pressboard precursor (2) as it passes a gap between the respective pair or rollers (3), wherein the compression stations (S1, S2, S3) are sequentially arranged such that the pressboard precursor can be sequentially passed through the plurality of compression stations (S1, S2, S3), wherein the gap is smaller for each compression station (S1, S2, S3) in the sequence.

10. The device (5) according to claim 9, wherein the electromagnetic wave emitter is configured to emit microwaves with frequency in the range of 1 GHz to 300 GHz.

11. The device (5) according to claim 10, further comprising one or more electromagnetic shield members (9) configured to, at least partially, enclose one or more volumes (V1, V2, V3) around one or more portions of the pressboard precursor (2).

12. The device (5) according to claim 9, wherein the electromagnetic wave emitter is configured to emit radio waves with frequency in the range of 1 MHz to 100 MHz.

13. The device (5) according to any one of claims 9-12, further comprising a vent (11) and/or a drain (10) configured to enable moisture, such as water and/or water vapor, to leave the one or more volumes (V1, V2, V3).

## Patentansprüche

1. Verfahren (M) zum Herstellen von Pressspan zur elektrischen Isolierung (1), wobei das Verfahren in irgendeiner Reihenfolge Folgendes umfasst:
a) mechanisches Komprimieren (M1) mindestens eines Presspanvorläufers (2), der zur elektrischen Isolierung geeignet ist, und
b) Emittieren (M2) von elektromagnetischen Wellen (EM) in Richtung des einen oder der mehreren Pressspanvorläufer (2), **dadurch gekennzeichnet, dass** die mechanische Komprimierung (M1) des Pressspanvorläufers (2) das Führen des Pressspanvorläufers (2) nacheinander durch mehrere Komprimierungsstationen (S1, S2, S3) umfasst, wobei jede Komprimierungsstation (S1, S2, S3) mindestens ein Paar Walzen (3) umfasst, die zusammen den Pressspanvorläufer (2) komprimieren, während er einen Spalt zwischen dem jeweiligen Paar von Walzen (3) durchläuft, wobei der Spalt für jede Station (S1, S2, S3) in der Abfolge kleiner ist.

2. Verfahren (M) nach Anspruch 1, wobei die elektromagnetischen Wellen (EM) Mikrowellen mit einer Frequenz im Bereich von 1 GHz bis 300 GHz sind.

3. Verfahren (M) nach Anspruch 1, wobei die elektromagnetischen Wellen (EM) Funkwellen mit einer Frequenz im Bereich von 1 MHz bis 100 MHz sind.

4. Verfahren (M) nach Anspruch 2, das ferner das Bereitstellen von einem oder mehreren Elementen (9) zur elektromagnetischen Abschirmung umfasst, die konfiguriert sind, ein oder mehrere Volumen(V1, V2, V3) um einen oder mehrere Abschnitte des Pressspanvorläufers (2) zumindest teilweise zu umschließen,
wobei die Mikrowellen innerhalb des einen oder der mehreren Volumen (V1, V2, V3) oder in diese emittiert werden.

5. Verfahren (M) nach Anspruch 4, das ferner das Entfernen von Wasser und/oder Wasserdampf aus dem einen oder den mehreren Volumen (V1, V2, V3) umfasst.

6. Verfahren (M) nach einem der Ansprüche 1-5, das ferner das Absenken eines Umgebungsgasdrucks um den Pressspanvorläufer (2) auf einen Druck unterhalb des Atmosphärendrucks umfasst.

7. Verfahren (M) nach einem der Ansprüche 1-5, wobei das Emittieren (M2) der elektromagnetischen Wellen das Emittieren von stoßweisen Bursts emittierter elektromagnetischer Wellen umfasst oder das wiederholte Verändern der Leistung der emittierten elektromagnetischen Wellen im Zeitablauf zwischen höheren Leistungspegeln und niedrigeren Leistungspegeln umfasst.

8. Verfahren nach einem der vorhergehenden Ansprüche, wobei die Leistung der emittierten elektromagnetischen Wellen derart konfiguriert ist, dass zumindest ein Anteil des Wassers des Presspanvorläufers (2) seine Phase von einer flüssigen Phase in eine Dampfphase oder eine Gasphase ändert.

9. Vorrichtung (5) zum Entwässern eines Pressspanvorläufers (2), wobei die Vorrichtung eine Komprimierungsanordnung umfasst, die konfiguriert ist, den Pressspanvorläufer (2) zu komprimieren, und mindestens eine Emissionseinrichtung (6) für elektromagnetische Wellen umfasst, die konfiguriert ist, elektromagnetische Wellen in Richtung des Pressspanvorläufers (2) und/oder des komprimierten Pressspans (1) zu emittieren, **dadurch gekennzeichnet, dass**
die Komprimierungsanordnung mehrere Komprimierungsstationen (S1, S2, S3) umfasst, wobei jede Komprimierungsstation (S1, S2, S3) mindestens ein Paar Walzen (3) umfasst, die ausgelegt sind, den Pressspanvorläufer (2) zu komprimieren, während er einen Spalt zwischen dem jeweiligen Paar von Walzen (3) durchläuft, wobei die Komprimierungsstationen (S1, S2, S3) nacheinander angeordnet sind, derart, dass der Pressspanvorläufer nacheinander durch die mehreren Komprimierungsstationen (S1, S2, S3) geführt werden kann, wobei der Spalt für jede Komprimierungsstation (S1, S2, S3) in der Abfolge kleiner ist.

10. Vorrichtung (5) nach Anspruch 9, wobei die Emissionseinrichtung für elektromagnetische Wellen konfiguriert ist, Mikrowellen mit einer Frequenz im Bereich von 1 GHz bis 300 GHz zu emittieren.

11. Vorrichtung (5) nach Anspruch 10, die ferner ein oder mehrere Elemente (9) zur elektromagnetischen Abschirmung umfasst, die konfiguriert sind, ein oder mehrere Volumen (V1, V2, V3) um einen oder mehrere Abschnitte des Pressspanvorläufers (2) zumindest teilweise zu umschließen.

12. Vorrichtung (5) nach Anspruch 9, wobei die Emissionseinrichtung für elektromagnetische Wellen konfiguriert ist, Funkwellen mit einer Frequenz im Bereich von 1 MHz bis 100 MHz zu emittieren.

13. Vorrichtung (5) nach einem der Ansprüche 9-12, die ferner eine Lüftungsöffnung (11) und/oder einen Abfluss (10) umfasst, die konfiguriert sind zu ermöglichen, dass Feuchtigkeit wie etwa Wasser und/oder Wasserdampf aus dem einen oder den mehreren Volumen (V1, V2, V3) austritt.

## Revendications

1. Procédé (M) de fabrication de carton comprimé pour l'isolation électrique (1), ledit procédé comportant, dans un ordre indifférent :
a) la compression mécanique (M1) d'au moins un précurseur de carton comprimé (2) adapté pour l'isolation électrique, et
b) l'émission (M2) d'ondes électromagnétiques (EM) vers le ou les précurseurs de carton comprimé (2), **caractérisé en ce que**
ladite compression mécanique (M1) du précurseur de carton comprimé (2) comprend le passage séquentiel du précurseur de carton comprimé (2) à travers une pluralité de postes de compression (S1, S2, S3), chaque poste de compression (S1, S2, S3) comprenant au moins une paire de rouleaux (3) comprimant ensemble le précurseur de carton comprimé (2) lorsqu'il passe dans un écartement entre la paire ou les rouleaux (3) respectifs, l'écartement étant plus petit pour chaque poste (S1, S2, S3) au fil de la séquence.

2. Procédé (M) selon la revendication 1, dans lequel les ondes électromagnétiques (EM) sont des micro-ondes dont la fréquence est comprise entre 1 GHz et 300 GHz.

3. Procédé (M) selon la revendication 1, dans lequel les ondes électromagnétiques (EM) sont des ondes radio dont la fréquence est comprise entre 1 MHz et 100 MHz.

4. Procédé (M) selon la revendication 2, comprenant en outre la prévision d'un ou plusieurs éléments de blindage électromagnétique (9) configurés pour, au moins partiellement, enfermer un ou plusieurs volumes (V1, V2, V3) autour d'une ou plusieurs parties du précurseur de carton comprimé (2).
les micro-ondes étant émises dans lesdits un ou plusieurs volumes (V1, V2, V3), ou vers l'intérieur de ceux-ci.

5. Procédé (M) selon la revendication 4, comprenant en outre l'élimination d'eau et/ou de vapeur d'eau desdits un ou plusieurs volumes (V1, V2, V3).

6. Procédé (M) selon l'une quelconque des revendications 1 à 5, comprenant en outre l'abaissement d'une pression de gaz ambiant autour du précurseur de carton comprimé (2) à une pression inférieure à la pression atmosphérique.

7. Procédé (M) selon l'une quelconque des revendications 1 à 5, dans lequel l'émission (M2) d'ondes électromagnétiques comprend l'émission de salves intermittentes d'ondes électromagnétiques émises, ou comprend la variation répétée de la puissance d'ondes électromagnétiques émises au cours du temps entre des niveaux de puissance supérieurs et des niveaux de puissance inférieurs.

8. Procédé (M) selon l'une quelconque des revendications précédentes, dans lequel la puissance des ondes électromagnétiques émises est configurée de telle sorte qu'au moins une partie de l'eau dudit précurseur de carton comprimé (2) change de phase en passant de la phase liquide à la phase vapeur ou la phase gazeuse.

9. Dispositif (5) de déshydratation d'un précurseur de carton comprimé (2), ledit dispositif comprenant un ensemble de compression configuré pour comprimer le précurseur de carton comprimé (2) et comprenant au moins un émetteur d'ondes électromagnétiques (6) configuré pour émettre des ondes électromagnétiques vers le précurseur de carton comprimé (2) et/ou le carton comprimé (1), **caractérisé en ce que**
ledit ensemble de compression comprend une pluralité de postes de compression (S1, S2, S3), chaque poste de compression (S1, S2, S3) comprenant au moins une paire de rouleaux (3) conçus pour comprimer le précurseur de carton comprimé (2) lorsqu'il passe dans un écartement entre la paire ou les rouleaux (3) respectifs, les postes de compression (S1, S2, S3) étant disposées de manière séquentielle de telle sorte que le précurseur de carton comprimé puisse passer séquentiellement à travers la pluralité de postes de compression (S1, S2, S3), l'écartement étant plus petit pour chaque poste de compression (S1, S2, S3) au fil de la séquence.

10. Dispositif (5) selon la revendication 9, dans lequel l'émetteur d'ondes électromagnétiques est configuré pour émettre des micro-ondes dont la fréquence est comprise entre 1 GHz et 300 GHz.

11. Dispositif (5) selon la revendication 10, comprenant en outre un ou plusieurs éléments de blindage électromagnétique (9) configurés pour, au moins partiellement, enfermer un ou plusieurs volumes (V1, V2, V3) autour d'une ou plusieurs parties du précurseur de carton comprimé (2).

12. Dispositif (5) selon la revendication 9, dans lequel l'émetteur d'ondes électromagnétiques est configuré pour émettre des ondes radio dont la fréquence est comprise entre 1 MHz et 100 MHz.

13. Dispositif (5) selon l'une quelconque des revendications 9 à 12, comprenant en outre un évent (11) et/ou un drain (10) configuré pour permettre à l'humidité, telle que l'eau et/ou la vapeur d'eau, de quitter lesdits un ou plusieurs volumes (V1, V2, V3).
